# EUROPÄISCHE PATENTSCHRIFT

(11) **EP 3 850 444 B1**
(45) Veröffentlichungstag und Bekanntmachung des Hinweises auf die Patenterteilung: **09.10.2024**
(21) Anmeldenummer: 19728002.7
(22) Anmeldetag: 28.05.2019
(51) Int. Cl.: G05B 19/042, G06F 1/16, G06F 1/20

(54) **BEDIENEINHEIT FÜR EINE BEHÄLTERBEHANDLUNGSMASCHINE**
OPERATING UNIT FOR A CONTAINER TREATMENT MACHINE
UNITÉ DE COMMANDE D'UNE MACHINE DE TRAITEMENT DE RÉCIPIENTS

(30) Priorität: 12.09.2018 DE 102018215511
(43) Veröffentlichungstag der Anmeldung: 21.07.2021
(73) Patentinhaber: Krones AG, 93073 Neutraubling (DE)
(72) Erfinder: ANDERS, Reiner, 93073 Neutraubling (DE)
(74) Vertreter: Grünecker Patent- und Rechtsanwälte PartG mbB
(86) Internationale Anmeldenummer: PCT/EP2019/063827
(87) Internationale Veröffentlichungsnummer: WO 2020/052821

(56) Entgegenhaltungen:
- WO-A1-2017/208800
- DE-A1- 102012 216 770
- JP-A- 2004 355 195
- US-A1- 2016 379 482
- US-A1- 2017 277 178
- US-A1- 2019 126 489

## Beschreibung

Die vorliegende Erfindung betrifft eine Bedieneinheit für eine Behälterbehandlungsmaschine nach Anspruch 1, ein Verfahren zum Betreiben einer Behälterbehandlungsmaschine mittels einer ein berührungsempfindliches Anzeigegerät umfassenden Bedieneinheit gemäß Anspruch 7 und eine Behälterbehandlungsmaschine zum Behandeln von Behältern gemäß Anspruch 12.

### Stand der Technik

US 2016/379482 A1 offenbart eine Bedieneinheit zur Steuerung einer Maschine.

DE 10 2012 216770 A1 offenbart eine Bedieneinheit für eine Behälterbehandlungsmaschine.

Bedieneinheiten für Behälterbehandlungsmaschinen sind aus dem Stand der Technik bekannt. Es ist grundsätzlich üblich, Behälterbehandlungsmaschinen mit Bedieneinheiten auszustatten, die es dem Bediener ermöglichen, mit der Behälterbehandlungsmaschine zu interagieren. Beispielsweise kann die Bedieneinheit eine Parametrierung der Maschine (Einstellen der Anzahl zu behandelnder Behälter pro Stunde oder andere Parameter) ermöglichen. Die Bedieneinheit ist dazu inzwischen als Touchdisplay ausgebildet, kann aber auch über eine Reihe von physischen Funktionstasten verfügen.

Aufgrund sicherheitsrelevanter Aspekte ist es bisher erforderlich, zum Einhalten der gesetzlichen Regelungen die Bedieneinheit als mit der Behälterbehandlungsmaschine verbunden auszubilden, sodass der Bediener stets in Reichweite des Not-Halt-Schalters ist, um einen gegebenenfalls notwendigen Maschinenstopp einzuleiten.

Damit ist aber der Bewegungsspielraum eines Bedieners an der Behälterbehandlungsmaschine stark eingeschränkt, selbst wenn er keine sicherheitsrelevanten Arbeiten mit der Bedienstation durchführen will.

### Aufgabe

Ausgehend vom bekannten Stand der Technik besteht die zu lösende technische Aufgabe somit darin, eine Bedieneinheit für eine Behälterbehandlungsmaschine anzugeben, die eine zuverlässige und den Sicherheitsaspekten beim Betrieb von Behälterbehandlungsmaschinen entsprechende Bedienung der Behälterbehandlungsmaschine ermöglicht, aber gleichzeitig den Bewegungsspielraum des Bedieners vergrößert.

### Lösung

Diese Aufgabe wird erfindungsgemäß durch die Bedieneinheit für eine Behälterbehandlungsmaschine gemäß Anspruch 1, das Verfahren zum Betreiben einer Behälterbehandlungsmaschine gemäß Anspruch 7 und die Behälterbehandlungsmaschine zum Behandeln von Behältern gemäß Anspruch 12 gelöst. Vorteilhafte Weiterbildungen der Erfindung sind in den Unteransprüchen erfasst.

Die erfindungsgemäße Bedieneinheit für eine Behälterbehandlungsmaschineumfasst zumindest ein berührungsempfindliches Anzeigegerät und die Bedieneinheit kann in zwei Betriebsmodi betrieben werden, wobei ein erster Betriebsmodus nur dann ausgeführt wird, wenn die Bedieneinheit mit einer Bedienstation der Behälterbehandlungsmaschine verbunden ist und wobei ein zweiter Betriebsmodus nur dann ausgeführt wird, wenn die Bedieneinheit nicht physisch mit der Bedienstation verbunden ist, wobei sich der erste Betriebsmodus und der zweite Betriebsmodus wenigstens hinsichtlich einer mit der Bedieneinheit ausführbaren Funktion unterscheiden. Mit dieser Bedieneinheit kann der Bediener die sicherheitsrelevanten Funktionen durchführen, während die Bedieneinheit im ersten Betriebsmodus betrieben wird und der Not-Halt-Schalter somit erreichbar ist. Eine eingeschränkte Anzahl von Funktionen oder andere Funktionen stehen dem Bediener immer noch zur Verfügung, wenn er sich im Bereich der Behälterbehandlungsmaschine mit der mobilen Bedieneinheit aufhält. Der Bewegungsspielraum insbesondere bei Durchführung von Diagnosen an der Behälterbehandlungsmaschine, die keine sicherheitsrelevante Tätigkeiten sind, wird so vergrößert.

Es kann vorgesehen sein, dass im ersten Betriebsmodus alle Funktionen der Bedieneinheit ausführbar sind und wobei im zweiten Betriebsmodus keine Funktion zugänglich ist, für die ein Not-Halt erforderlich ist. Die Sicherheit des Bedieners beim Betrieb der Behälterbehandlungsmaschine unter Verwendung der Bedieneinheit wird hiermit gewährleistet.

Im zweiten Betriebsmodus ist wenigstens eine der folgenden Funktionen verfügbar: Diagnosefunktion, Parametrierung der Behälterbehandlungsmaschine, Überwachung des Betriebs der Behälterbehandlungsmaschine. Diese Diagnosen sind für den Bediener auch ohne Zugänglichkeit eines Not-Halt-Schalters durchführbar, ohne dass hier ein relevantes Sicherheitsrisiko besteht. Gleichzeitig können diese Aufgaben vom Bediener mit dieser Ausführungsform effektiv durchgeführt werden, da er beispielsweise die zu parametrierenden Komponenten der Maschine direkt beobachten kann, während die Parametrierung durchführt.

Weiterhin kann die Bedieneinheit über eine Erkennungseinrichtung verfügen, die ausgebildet ist, eine Verbindung der Bedieneinheit mit der Bedienstation zu erkennen und abhängig davon, ob die Bedieneinheit mit der Bedienstation verbunden ist oder nicht, den ersten Betriebsmodus oder den zweiten Betriebsmodus zu aktivieren. die Bedieneinheit über eine Erkennungseinrichtung verfügt, die ausgebildet ist, eine Verbindung der Bedieneinheit mit der Bedienstation zu erkennen und abhängig davon, ob die Bedieneinheit mit der Bedienstation verbunden ist oder nicht, den ersten Betriebsmodus oder den zweiten Betriebsmodus zu aktivieren. Ein zuverlässiger Wechsel zwischen den einzelnen Betriebsmodi ist so möglich und es kann sichergestellt werden, dass nicht unbeabsichtigt sicherheitsrelevante Funktionen auf der Bedieneinheit ausgeführt werden können, wenn beispielsweise ein Not-Halt-Schalter nicht erreichbar ist.

In einer Weiterbildung dieser Ausführungsform ist vorgesehen, dass die Erkennungseinrichtung weiterhin ausgebildet ist, die Behälterbehandlungsmaschine, mit der die Bedieneinheit verbunden ist, zu erkennen und wobei optional die Erkennungseinrichtung ausgebildet ist, abhängig von der erkannten Behälterbehandlungsmaschine wenigstens die im ersten Betriebsmodus verfügbaren Funktionen einzustellen. Die Bedieneinheit kann so auch für eine Reihe von Behälterbehandlungsmaschinen gleichzeitig genutzt werden, was dem Bediener die Interaktion mit den Behälterbehandlungsmaschinen erleichtert.

Ferner kann die Bedieneinheit einen Akkumulator umfassen, der die Stromversorgung der Bedieneinheit während des zweiten Betriebsmodus bewirken kann. Ein langandauernder mobiler Betrieb der Bedieneinheit wird damit sichergestellt.

In einer Ausführungsform ist vorgesehen, dass die Bedieneinheit ein Betätigungselement umfasst, mit dem der Bedieneinheit der Wechsel vom ersten Betriebsmodus auf den zweiten Betriebsmodus angezeigt werden kann, wobei die Bedieneinheit ausgebildet ist, bei einer Betätigung des Betätigungselements zumindest alle nur im ersten Betriebsmodus verfügbaren Funktionen zu beenden und danach das Entnehmen der Bedieneinheit aus der Bedienstation freizugeben. Sicherheitsrelevante Prozesse können so beendet werden, während sich die Bedienereinheit und damit auch der Bediener noch im Zugänglichkeitsbereich des Not-Halt-Schalters befinden, sodass ein mögliches Risiko für den Bediener weiter minimiert wird.

In dem erfindungsgemäßen Verfahren zum Betreiben einer Behälterbehandlungsmaschine mittels einer ein berührungsempfindliches Anzeigegerät umfassenden Bedieneinheit wird die Bedieneinheit nur in einem mit einer Bedienstation der Behälterbehandlungsmaschine verbundenen Zustand in einem ersten Betriebsmodus betrieben und in einem Zustand, in dem die Bedieneinheit nicht physisch mit der Bedienstation verbunden ist, nur in einem zweiten Betriebsmodus betrieben wird, wobei sich der erste Betriebsmodus und der zweite Betriebsmodus wenigstens hinsichtlich einer mit der Bedieneinheit ausführbaren Funktion unterscheiden. Dieses Verfahren gestattet eine flexible Bedienung der Behälterbehandlungsmaschine mit einem vergrößerten Bewegungsspielraum des Bedieners.

Es kann vorgesehen sein, dass im ersten Betriebsmodus alle Funktionen der Bedieneinheit ausführbar sind und wobei im zweiten Betriebsmodus keine Funktion zugänglich ist, für die ein Not-Halt erforderlich ist. Diese Ausführungsform verbessert die Sicherheit des Bedieners bei mobiler Verwendung der Bedieneinheit.

Ferner kann im zweiten Betriebsmodus wenigstens eine der folgenden Funktionen verfügbar sein: Diagnosefunktion, Parametrierung der Behälterbehandlungsmaschine, Überwachung des Betriebs der Behälterbehandlungsmaschine. Diese Funktionen stellen kein relevantes Sicherheitsrisiko für den Bediener dar und können somit auch mit der mobilen Bedieneinheit zuverlässig durchgeführt werden.

Gemäß einer Ausführungsform ist vorgesehen, dass eine Erkennungseinrichtung der Bedieneinheit erkennt, ob die Bedieneinheit mit der Bedienstation verbunden ist und abhängig davon, ob die Bedieneinheit mit der Bedienstation verbunden ist oder nicht, den ersten Betriebsmodus oder den zweiten Betriebsmodus aktiviert. Ein versehentliches Betreiben der Bedieneinheit im ersten Betriebsmodus kann so verhindert und damit die Sicherheit des Bedieners weiter erhöht werden.

In einer Weiterbildung dieser Ausführungsform ist vorgesehen, dass die Erkennungseinrichtung die Behälterbehandlungsmaschine, mit der die Bedieneinheit verbunden ist, erkennt und wobei optional die Erkennungseinrichtung abhängig von der erkannten Behälterbehandlungsmaschine wenigstens die im ersten Betriebsmodus verfügbaren Funktionen einstellt. Eine flexible Verwendung der Bedieneinheit wird mit dieser Ausführungsform realisiert.

Es kann auch vorgesehen sein, dass durch Betätigung eines Betätigungselements der Bedieneinheit der Wechsel vom ersten Betriebsmodus auf den zweiten Betriebsmodus angezeigt wird, und die Bedieneinheit bei Betätigung des Betätigungselements alle nur im ersten Betriebsmodus verfügbaren Funktionen beendet und danach das Entnehmen der Bedieneinheit aus der Bedienstation freigibt. Durch diese Ausführungsform wird sichergestellt, dass alle möglicherweise sicherheitsrelevanten Prozesse auf der Bedieneinheit noch beendet werden, bevor der Bediener diese von der Behälterbehandlungsmaschine entfernen kann und dann gegebenenfalls nicht mehr in Reichweite eines Not-Halt-Schalters wäre.

Die erfindungsgemäße Behälterbehandlungsmaschine zum Behandeln von Behältern, beispielsweise in der getränkeverarbeitenden Industrie oder in der Verpackungsindustrie, umfasst eine Bedienstation zum Verbinden mit einer Bedieneinheit nach einer der vorangegangenen Ausführungsformen und die Behälterbehandlungsmaschine ist ausgebildet, mit der Bedieneinheit das Verfahren nach einer der vorherigen Ausführungsformen auszuführen. Diese Behälterbehandlungsmaschine gewährleistet eine sichere und zugleich zuverlässige und flexible Interaktion mit dem Bediener.

Weiterhin kann vorgesehen sein, dass die Bedienstation eine Tasterbox umfasst, die optional einen Not-Halt-Schalter umfasst, und/oder wobei die Bedienstation eine Spannungsversorgung zum Versorgen der Bedieneinheit im mit der Bedienstation verbundenen Zustand umfasst. Der so vorgesehene Not-Halt-Schalter gewährleistet die Sicherheit des Bedieners bei Verwendung der Bedieneinheit im ersten Betriebsmodus. Durch die Spannungsversorgung kann zumindest im ersten Betriebsmodus der Betrieb der Bedieneinheit sichergestellt werden und gleichzeitig vorteilhaft beispielsweise ein Akkumulator der Bedieneinheit geladen werden, sodass diese auch während des Betriebs im zweiten Betriebsmodus möglichst lang betrieben werden kann.

### Kurze Beschreibung der Figuren

- Fig. 1: zeigt eine Bedienstation mit dazugehöriger Bedieneinheit gemäß einer Ausführungsform
- Fig. 2: zeigt eine Behälterbehandlungsmaschine mit mehreren Bedienstationen gemäß einer Ausführungsform

### Ausführliche Beschreibung

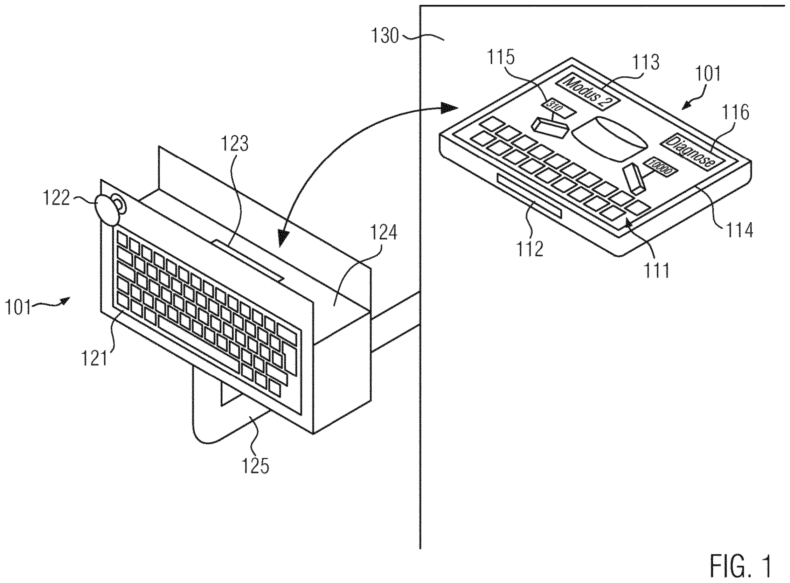

Fig. 1 zeigt eine Bedienstation 102 und eine erfindungsgemäße Bedieneinheit 101 gemäß einer Ausführungsform der Erfindung.

Die Bedienstation 102 ist, wie hier dargestellt, an einer nicht näher gekennzeichneten Behälterbehandlungsmaschine 130 angeordnet. Diese Anordnung kann beispielsweise über die Verbindung 125, in der auch eine oder mehrere Leitungen, wie eine Stromleitung oder eine zum Datentransfer ausgebildete Leitung (bevorzugt bidirektional) angeordnet sind, vorgesehen sein. Diese Leitungen können jedoch auch separat angelegt sein.

Die Behälterbehandlungsmaschine 130 kann jede Behälterbehandlungsmaschine sein, die in der getränkeverarbeitenden Industrie oder Verpackungsindustrie oder einer anderen behälterverarbeitenden Industrie zum Einsatz kommt. Dazu zählen beispielsweise aber nicht abschließend Maschinen zur Herstellung von Behältern, wie Blasformmaschinen, aber auch Maschinen zur weiteren Behandlung der Behälter, insbesondere zum Ausstatten der Behälter mit Druckbildern oder Etiketten und zum Inspizieren der Behälter. Auch Füllmaschinen oder Verschließer oder andere Maschinen fallen hierunter. Die Erfindung ist nicht auf die Anwendung in der Lebensmittelindustrie beschränkt, sondern kann auch im Bereich der Medizintechnik oder Kosmetik oder anderen technischen Gebieten zum Einsatz kommen.

Die Bedienstation 102 umfasst wenigstens eine Aufnahme 124, in die die mobile Bedieneinheit 101 aufgenommen werden kann, bzw. mit deren Hilfe eine Verbindung der Bedieneinheit mit der Bedienstation erfolgen kann. Zu diesem Zweck kann die Bedienstation 102 einen Anschluss 123 umfassen, der mit einem korrespondierenden Anschluss der Bedieneinheit 101 (Anschluss 112) verbunden werden kann. Dieser Anschluss 123 kann beispielsweise genutzt werden und ausgebildet sein, um eine Stromversorgung der Bedieneinheit 101 in mit der Bedienstation 102 verbundenem Zustand sicherzustellen und kann auch zum Zwecke des Datenaustausches mit der Bedieneinheit 101 vorgesehen sein.

Die Bedienstation 102 kann bevorzugt eine Tastenbox 121 umfassen, die beispielsweise als eine gängige Tastatur, wie eine QWERTZ-Tastatur ausgebildet sein kann. Dieser zugeordnet oder ein Teil dieser kann ein Not-Halt-Schalter 122 sein. Dieser Not-Halt-Schalter 122 ist in seiner Funktion grundsätzlich für den Fachmann bekannt und erlaubt durch Betätigung den sofortigen Stopp der (gesamten) Behälterbehandlungsmaschine einzuleiten, sodass im Falle einer Gefahr für einen Bediener oder einen zusätzlich zum Bediener im Bereich der Behälterbehandlungsmaschine sich befindenden Menschen sofort ein Stopp sämtlicher Bewegungen in der Behälterbehandlungsmaschine und auch sämtlicher sonstiger für den Bediener oder die zusätzliche Person ein Risiko darstellenden Aktionen bewirkt werden kann. Der Not-Halt-Schalter kann somit von einem Bediener, der sich in hinreichender Nähe zur Bedienstation 102 befindet, zu jeder Zeit betätigt werden.

Anstelle oder zusätzlich zum Not-Halt-Schalter kann auch eine Zustimmungs- oder Bestätigungstaste zum Bestätigen von über die Bedieneinheit eingegebenen Aktionen oder von der Behälterbehandlungsmaschine durchzuführenden Prozessen. Solche Bestätigungstasten sind üblicherweise dann vorgesehen, wenn die Aktionen oder Prozesse sicherheitsrelevant sind, also ggf. ein Verletzungsrisiko für umstehende Personen darstellen.

Die Bedieneinheit 101 ist bevorzugt zumindest so ausgebildet, dass sie ein berührungsempfindliches Anzeigegerät (Touchdisplay oder Ähnliches) umfasst, auf dem nicht nur eine Anzeige bestimmter Informationen erfolgt, sondern gleichzeitig eine Interaktion mit der Bedieneinheit 101 möglich ist. Zu diesem Zweck kann auf dem berührungsempfindlichen Anzeigegerät 114 beispielsweise eine Tastatur 111 eingeblendet werden. Auch andere Interaktionsmöglichkeiten sind hier denkbar. Zusätzlich oder alternativ können Informationen und Interaktionsmöglichkeiten geschaffen sein, die die aktuelle Funktion, die mit der Bedieneinheit 101 ausgeführt wird, spezifizieren. In der hier dargestellten Ausführungsform der Bedieneinheit ist das Element 116 vorgesehen, das die gegenwärtige Funktion als "Diagnose" kennzeichnet. Es kann vorgesehen sein, dass dieses Element auch zur Interaktion ausgebildet ist, sodass durch ein Klicken auf das Element 116 der Bediener die Funktion beispielsweise von der hier dargestellten Diagnose auf die Parametrierung der Behälterbehandlungsmaschine ändern kann.

In der hier dargestellten Diagnosefunktion können Informationen zu der Behälterbehandlungsmaschine angezeigt werden. So wird hier beispielhaft die Anzahl der noch verfügbaren Etiketten in dem Etikettenmagazin mit der Anzeige 115 realisiert. Auch andere Diagnoseergebnisse sind hier möglich. Für den Fall, dass die Bedieneinheit zur Parametrierung der Behälterbehandlungsmaschine eingestellt ist, können eine oder mehrere Regler oder Schieber oder andere Interaktionsmöglichkeiten angezeigt werden, mit denen Parameter der Behälterbehandlungsmaschine und deren Betrieb eingestellt werden können.

Die Bedieneinheit 101 umfasst als üblicher "Tablet Computer" bevorzugt auch einen Akkumulator, dessen Kapazität groß genug ist, um bei voller Aufladung einen mobilen Betrieb (also einen Betrieb im zweiten Betriebsmodus) der Bedieneinheit 101 über einen längeren Zeitraum, bevorzugt wenigstens eine halbe Stunde, besonders bevorzugt mehrere Stunden, zu gewährleisten. Die Bedieneinheit 101 kann im zweiten Betriebsmodus über eine drahtlose Datenverbindung mit der Bedienstation oder zumindest der Behälterbehandlungsmaschine oder einer ihr zugeordneten zentralen Steuereinheit kommunizieren. Dazu kann die Bedieneinheit ausgebildet sein, entsprechend einem oder mehrerer Kommunikationsprotokolle, wie Bluetooth oder WLAN, Daten bidirektional auszutauschen.

Erfindungsgemäß ist vorgesehen, dass die Bedieneinheit 101 in wenigstens zwei Betriebsmodi betrieben werden kann. Der erste Betriebsmodus wird nur dann ausgeführt, wenn die Bedieneinheit 101 mit der Bedienstation 102 verbunden ist. Bevorzugt wird dieser erste Betriebsmodus nur dann ausgeführt, wenn die Bedieneinheit 101 in der Aufnahme 124 angeordnet, bzw. zumindest mit dem Anschluss 123 verbunden ist. Dazu ist eine Anordnung in der Aufnahme 114 nicht zwingend. Es kann auch vorgesehen sein, dass eine flexible Verbindungsleitung (beispielsweise in Form eines Kabels mit einem USB-Anschluss oder Ähnliches) an der Bedienstation 102 vorgesehen ist, um eine Verbindung mit dem Anschluss 112 der Bedieneinheit 101 herzustellen. Nur für den Fall, dass die Bedieneinheit auf eine solche oder entsprechende Weise mit der Bedienstation verbunden ist, ist gewährleistet, dass der Bediener in Reichweite des Not-Halt-Schalters ist.

Der zweite Betriebsmodus wird erfindungsgemäß nur dann ausgeführt, wenn die Bedieneinheit 101 nicht mit der Bedienstation 102 verbunden ist. Erfindungsgemäß unterscheiden sich der erste Betriebsmodus und der zweite Betriebsmodus der Bedieneinheit darin, dass sie sich zumindest hinsichtlich einer in den Betriebsmodi ausführbaren Funktion, die mit der Bedieneinheit ausgeführt werden kann, unterscheiden.

Besonders bevorzugt unterscheiden sich der erste Betriebsmodus und der zweite Betriebsmodus der Bedieneinheit 101 darin, dass im ersten Betriebsmodus sämtliche Funktionen der Bedieneinheit (in Verbindung mit der Bedienstation 102) ausgeführt werden können. Dies umfasst insbesondere auch sicherheitsrelevante Funktionen. Dazu kann beispielsweise zählen, dass bei Ausführung der Behälterbehandlungsmaschine 130 als Etikettiermaschine der Bediener mit Hilfe der Bedieneinheit 101 und gegebenenfalls der Tastenbox 121 ein Etikettieraggregat der Etikettiermaschine so steuern kann, dass dieses von der Behälterbehandlungsmaschine automatisch abgesenkt und entkoppelt wird. Diese Aktion birgt ein gewisses Sicherheitsrisiko nicht nur für den Bediener, sondern auch für umstehende Personen, da das Etikettieraggregat in seiner Höhe verstellt wird und damit beispielsweise zu Verletzungen von unter dem Etikettieraggregat befindlichen Füßen von Personen führen kann.

Auch andere sicherheitsrelevante Funktionen, die grundsätzlich als solche Funktionen verstanden werden können, für die ein Not-Halt erforderlich werden kann, können in diesem ersten Betriebsmodus ausgeführt werden.

Im zweiten Betriebsmodus können bevorzugt nur solche Funktionen ausgeführt werden, für die ein Not-Halt der Maschine nicht vorgesehen sein muss. Dazu zählen insbesondere Diagnosefunktionen und Parametrierungsfunktionen. Beispielsweise kann der Bediener sowohl im ersten als auch im zweiten Betriebsmodus der Bedieneinheit die Behälterbehandlungsmaschine so steuern, dass der Behälterdurchsatz verändert wird, da dies lediglich die Transportgeschwindigkeit der Behälter betrifft und somit kein unmittelbares Sicherheitsrisiko durch eine Veränderung der Lage physischer Komponenten der Maschine besteht. Ist die Behälterbehandlungsmaschine beispielsweise als Druckmaschine ausgebildet, kann unter der Parametrisierung der Druckmaschine auch verstanden werden, dass die Druckmaschine so gesteuert wird, dass sie anstelle eines ersten Druckbildes ein zweites Druckbild aufbringt. Dies betrifft lediglich die interne Steuerung der Druckköpfe und damit beispielsweise die Zufuhr bestimmter Farbkomponenten und das Ausbringen der Drucktinte auf die Oberfläche des Behälters. Ein unmittelbares Sicherheitsrisiko für den Bediener oder andere Personen existiert hier nicht, sodass eine solche Funktion auch im zweiten Betriebsmodus der Bedieneinheit durchführbar ist.

Um sicherzustellen, dass stets der richtige Betriebsmodus der Bedieneinheit eingestellt wird, kann eine hier nicht weiter dargestellte Erkennungseinrichtung in Form eines physischen Schalters oder Kontakts an der Bedieneinheit 101 vorgesehen sein. Diese Erkennungseinrichtung ist zumindest dazu ausgebildet, zu erkennen, ob die Bedienstation mit der Bedieneinheit verbunden ist. Handelt es sich bei der Erkennungseinrichtung beispielsweise um einen physischen Kontakt oder einen elektrischen Schalter, wird dieser nur betätigt, wenn die Bedieneinheit in der Bedienstation 102 angeordnet bzw. mit dieser verbunden ist. Aufgrund dieser eindeutigen Zuordnung der Verbindung der Bedieneinheit 101 mit der Bedienstation 102 kann die Erkennungseinrichtung dann erkennen, ob die Bedieneinheit 101 mit der Bedienstation 102 verbunden ist. Die Erkennungseinrichtung kann die Verbindung zwischen der Bedienstation und der Bedieneinheit auch dadurch erkennen, dass die Anschlüsse 112 und 123 miteinander verbunden sind, beispielsweise indem die Erkennungseinrichtung den Stromfluss und/oder Datenaustausch erkennt. Die Erkennungseinrichtung kann also sowohl als Hardware-Komponente (Schalter oder Kontakt) als auch als Software-Komponente (zum Erkennen von Stromfluss oder Datenaustausch) realisiert sein. Auch eine Erkennungseinrichtung die sowohl aus Software-Komponente als auch aus Hardware-Komponente besteht oder solche umfasst ist möglich.

Bevorzugt kann die Erkennungseinrichtung abhängig davon dann den ersten Betriebsmodus oder den zweiten Betriebsmodus aktivieren. Stellt die Erkennungseinrichtung also fest, dass die Bedieneinheit mit der Bedienstation verbunden ist, wird der erste Betriebsmodus aktiviert und alle mit der Bedieneinheit durchführbaren Funktionen freigeschaltet. Stellt die Erkennungseinrichtung hingegen fest, dass die Bedieneinheit nicht mit der Bedienstation verbunden ist, aktiviert sie den zweiten Betriebsmodus.

Diese Ausführungsform kann auch vorteilhaft genutzt werden, um die Einsetzbarkeit der Bedieneinheit an unterschiedlichen Behälterbehandlungsmaschinen zu erhöhen. So kann vorgesehen sein, dass die Erkennungseinrichtung nicht nur erkennen kann, ob die Bedieneinheit mit einer Bedienstation 102 verbunden ist, sondern dass die Erkennungseinrichtung gleichzeitig erkennen kann, mit welcher Behälterbehandlungsmaschine bzw. mit welcher Bedienstation welcher Behälterbehandlungsmaschine die Bedieneinheit 101 verbunden ist. Abhängig von dieser Feststellung kann dann eine Einstellung der zumindest im ersten Betriebsmodus verfügbaren Funktionen erfolgen.

Erkennt die Erkennungseinrichtung beispielsweise, dass die Bedieneinheit 101 mit einer Bedienstation 102 einer Druckmaschine verbunden ist, so können Funktionen, die für den Betrieb der Druckmaschine relevant sind, aktiviert werden. Erkennt die Erkennungseinrichtung hingegen, dass die Bedieneinheit mit einer Inspektionseinrichtung zum Inspizieren von (befüllten und bereits verschlossenen) Behältern verbunden ist, können dafür spezialisierte Funktionen, beispielsweise die Diagnose der Inspektionseinheiten wie Kamera oder Ähnliches bereitgestellt werden, wohingegen die Funktionen für die Druckmaschine nicht länger verfügbar sind.

Ähnlich verhält es sich für das Erkennen von unterschiedlichen Bedienstationen an derselben Behälterbehandlungsmaschine durch die Erkennungseinrichtung. Umfasst die Behälterbehandlungsmaschine beispielsweise eine erste Bedienstation, die dem Karussell oder der Transporteinrichtung der Behälterbehandlungsmaschine zugeordnet ist, können bei Erkennen der Verbindung der Bedieneinheit mit dieser Bedienstation andere Funktionen angezeigt werden als die Funktionen, die angezeigt werden, wenn die Bedieneinheit mit einer einem Behälterbehandlungsaggregat (beispielsweise Etikettieraggregat oder Druckstation) zugeordneten Bedienstation verbunden ist.

Zusätzlich oder alternativ zur Erkennungseinrichtung kann vorgesehen sein, dass die Bedieneinheit 101 ein Betätigungselement 113 (beispielsweise in Form eines Elements an dem berührungsempfindlichen Anzeigegerät 114 oder ein separater physischer Schalter) umfasst. Mit diesem Betätigungselement kann der Bediener der Bedieneinheit 101 und/oder der Bedienstation 102 signalisieren, dass der Wechsel vom ersten Betriebsmodus auf den zweiten Betriebsmodus erfolgen soll. Falls noch Prozesse durchgeführt werden, die beispielsweise sicherheitsrelevant sind oder grundsätzlich nur im ersten Betriebsmodus gestattet sind, kann das Lösen der Verbindung zwischen der Bedieneinheit 101 und der Bedienstation 102 unterbunden bleiben, bis diese Prozesse oder Funktionen beendet sind. Anschließend kann dann das Lösen der Verbindung der Bedieneinheit 101 von der Bedienstation 102 freigegeben werden.

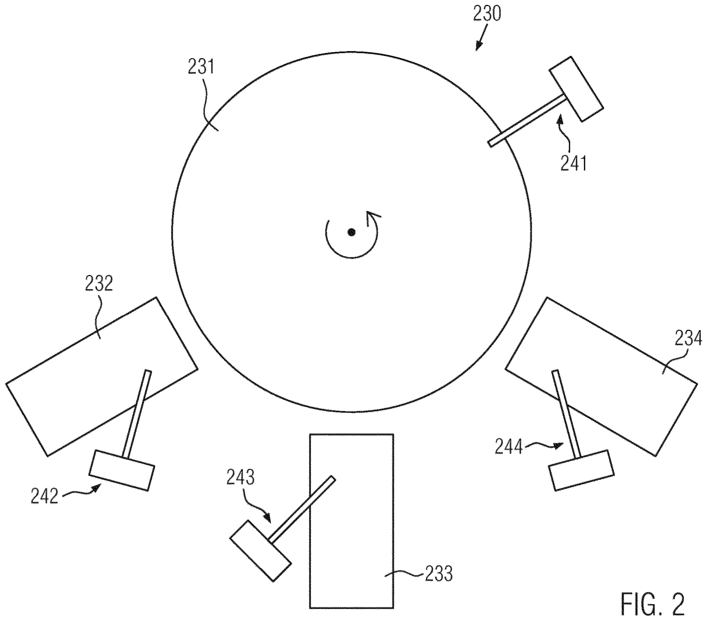

Fig. 2 zeigt beispielhaft eine Behälterbehandlungsmaschine 230 gemäß einer Ausführungsform der Erfindung in Draufsicht. In der hier dargestellten Ausführungsform ist die Behälterbehandlungsmaschine 230 als Etikettiermaschine ausgeführt, die ein Behälterkarussell 231 umfasst, entlang dessen Peripherie (bevorzugt in geeigneten Behälteraufnahmen) Behälter entlang der dargestellten Pfeilrichtung transportiert werden. Zusätzlich ist an der Peripherie des Karussells ein oder eine Mehrzahl von Etikettieraggregaten 232-234 angeordnet, die Etiketten auf die in dem Karussell 231 transportierten Behälter aufbringen können. Diese Ausgestaltung von Etikettiermaschinen ist aus dem Stand der Technik hinreichend bekannt.

In der dargestellten Ausführungsform umfasst jedes Etikettieraggregat eine Bedienstation 242-244, wie sie bereits in Fig. 1 beschrieben wurde. Zusätzlich ist dem Karussell 231 eine Bedienstation 241 zugeordnet. Jede der Bedienstationen verfügt über geeignete Mittel zum Herstellen einer Verbindung mit einer Bedieneinheit, sodass die Bedieneinheit bei Verbindung mit einer der Bedienstationen in einem ersten Betriebsmodus betrieben wird und ohne eine Verbindung zu einer dieser Betriebsstationen im zweiten Betriebsmodus betrieben wird. Hierzu sind sämtliche bereits in Bezug auf Fig. 1 beschriebenen Ausführungsformen der Bedienstation und/oder der Bedieneinheit denkbar. Insbesondere können die verfügbaren Funktionen im ersten Betriebsmodus abhängig von der jeweiligen Betriebsstation 241-244 sein. So können die im ersten Betriebsmodus verfügbaren Funktionen bei Verbindung der Bedieneinheit mit der Betriebsstation 241 ausschließlich die Funktionen des Karussells 231 betreffen. Im Gegensatz dazu können die verfügbaren Funktionen im ersten Betriebsmodus der Bedieneinheit bei Verbindung mit einer der Bedienstationen 242-244 von dem jeweiligen Etikettieraggregat abhängen.

Die Ausgestaltung der Behälterbehandlungsmaschine gemäß Fig. 2 ist nicht beschränkend. Alternativ können auch andere Behälterbehandlungsmaschinen vorgesehen sein. Zusätzlich kann die Behälterbehandlungsmaschine 230 in einer Anlage von Behälterbehandlungsmaschinen integriert sein, die zumindest zwei Behälterbehandlungsmaschinen umfasst.

Die beschriebene Bedieneinheit ist vorgesehen für die Verwendung zusammen mit den beschriebenen Behälterbehandlungsmaschinen und den darin vorgesehenen Bedienstationen. Jede der Ausführungsformen der Bedieneinheit 101 aus Fig. 1 sind mit jeder der beschriebenen Ausführungsformen von Behälterbehandlungsmaschinen und insbesondere der Ausführungsform gemäß Figur 2 kombinierbar.

## Patentansprüche

1. Bedieneinheit (101) für eine Behälterbehandlungsmaschine (130), wobei die Bedieneinheit zumindest ein berührungsempfindliches Anzeigegerät (114) umfasst und die Bedieneinheit in zwei Betriebsmodi betrieben werden kann, wobei ein erster Betriebsmodus nur dann ausgeführt wird, wenn die Bedieneinheit (101) mit einer Bedienstation (102) der Behälterbehandlungsmaschine verbunden ist und wobei ein zweiter Betriebsmodus nur dann ausgeführt wird, wenn die Bedieneinheit (101) nicht physisch mit der Bedienstation (102) verbunden ist, wobei sich der erste Betriebsmodus und der zweite Betriebsmodus wenigstens hinsichtlich einer mit der Bedieneinheit ausführbaren Funktion unterscheiden, **dadurch gekennzeichnet dass** im zweiten Betriebsmodus wenigstens eine der folgenden Funktionen verfügbar ist: Diagnosefunktion, Parametrierung der Behälterbehandlungsmaschine, Überwachung des Betriebs der Behälterbehandlungsmaschine.

2. Bedieneinheit (101) nach Anspruch 1, wobei im ersten Betriebsmodus alle Funktionen der Bedieneinheit (101) ausführbar sind und wobei im zweiten Betriebsmodus keine Funktion zugänglich ist, für die ein Not-Halt erforderlich ist.

3. Bedieneinheit (101) nach einem der Ansprüche 1 bis 2, wobei die Bedieneinheit (101) über eine Erkennungseinrichtung verfügt, die ausgebildet ist, eine Verbindung der Bedieneinheit (101) mit der Bedienstation (102) zu erkennen und abhängig davon, ob die Bedieneinheit (101) mit der Bedienstation (102) verbunden ist oder nicht, den ersten Betriebsmodus oder den zweiten Betriebsmodus zu aktivieren.

4. Bedieneinheit (101) nach Anspruch 3, wobei die Erkennungseinrichtung weiterhin ausgebildet ist, die Behälterbehandlungsmaschine (130), mit der die Bedieneinheit (101) verbunden ist, zu erkennen und wobei optional die Erkennungseinrichtung ausgebildet ist, abhängig von der erkannten Behälterbehandlungsmaschine (130) wenigstens die im ersten Betriebsmodus verfügbaren Funktionen einzustellen.

5. Bedieneinheit (101) nach einem der Ansprüche 1 bis 4, wobei die Bedieneinheit einen Akkumulator umfasst, der die Stromversorgung der Bedieneinheit (101) während des zweiten Betriebsmodus bewirken kann.

6. Bedieneinheit (101) nach einem der Ansprüche 1 bis 5, wobei die Bedieneinheit (101) ein Betätigungselement (113) umfasst, mit dem der Bedieneinheit (101) der Wechsel vom ersten Betriebsmodus auf den zweiten Betriebsmodus angezeigt werden kann, wobei die Bedieneinheit (101) ausgebildet ist, bei einer Betätigung des Betätigungselements (113) zumindest alle nur im ersten Betriebsmodus verfügbaren Funktionen zu beenden und danach das Entnehmen der Bedieneinheit aus der Bedienstation (102) freizugeben.

7. Verfahren zum Betreiben einer Behälterbehandlungsmaschine (130) mittels einer ein berührungsempfindliches Anzeigegerät (114) umfassenden Bedieneinheit (101), wobei die Bedieneinheit (101) nur in einem mit einer Bedienstation (102) der Behälterbehandlungsmaschine (130) verbundenen Zustand in einem ersten Betriebsmodus betrieben wird und in einem Zustand, in dem die Bedieneinheit (101) nicht physisch mit der Bedienstation (102) verbunden ist, nur in einem zweiten Betriebsmodus betrieben wird, wobei sich der erste Betriebsmodus und der zweite Betriebsmodus wenigstens hinsichtlich einer mit der Bedieneinheit (101) ausführbaren Funktion unterscheiden, **dadurch gekennzeichnet dass** im zweiten Betriebsmodus wenigstens eine der folgenden Funktionen verfügbar ist: Diagnosefunktion, Parametrierung der Behälterbehandlungsmaschine, Überwachung des Betriebs der Behälterbehandlungsmaschine.

8. Verfahren nach Anspruch 7, wobei im ersten Betriebsmodus alle Funktionen der Bedieneinheit (101) ausführbar sind und wobei im zweiten Betriebsmodus keine Funktion zugänglich ist, für die ein Not-Halt erforderlich ist.

9. Verfahren nach einem der Ansprüche 7 bis 8, wobei eine Erkennungseinrichtung der Bedieneinheit (101) erkennt, ob die Bedieneinheit (101) mit der Bedienstation (102) verbunden ist und abhängig davon, ob die Bedieneinheit (101) mit der Bedienstation verbunden ist oder nicht, den ersten Betriebsmodus oder den zweiten Betriebsmodus aktiviert.

10. Verfahren nach Anspruch 9, wobei die Erkennungseinrichtung die Behälterbehandlungsmaschine (130), mit der die Bedieneinheit (101) verbunden ist, erkennt und wobei optional die Erkennungseinrichtung abhängig von der erkannten Behälterbehandlungsmaschine wenigstens die im ersten Betriebsmodus verfügbaren Funktionen einstellt.

11. Verfahren nach einem der Ansprüche 7 bis 10, wobei durch Betätigung eines Betätigungselements (113) der Bedieneinheit (101) der Wechsel vom ersten Betriebsmodus auf den zweiten Betriebsmodus angezeigt wird, und die Bedieneinheit (101) bei Betätigung des Betätigungselements alle nur im ersten Betriebsmodus verfügbaren Funktionen beendet und danach das Entnehmen der Bedieneinheit (101) aus der Bedienstation (102) freigibt.

12. Behälterbehandlungsmaschine (130) zum Behandeln von Behältern, beispielsweise in der getränkeverarbeitenden Industrie oder in der Verpackungsindustrie, wobei die Behälterbehandlungsmaschine eine Bedienstation (102) zum Verbinden mit einer Bedieneinheit (101) nach einem der Ansprüche 1 bis 7 umfasst und die Behälterbehandlungsmaschine ausgebildet ist, mit der Bedieneinheit (101) das Verfahren nach einem der Ansprüche 7 bis 11 auszuführen.

13. Behälterbehandlungsmaschine (130) nach Anspruch 12, wobei die Bedienstation (102) eine Tasterbox umfasst, die optional einen Not-Halt-Schalter umfasst, und/oder wobei die Bedienstation eine Spannungsversorgung zum Versorgen der Bedieneinheit (101) im mit der Bedienstation verbundenen Zustand umfasst.

## Claims

1. Operating unit (101) for a container treatment machine (130), wherein the operating unit comprises at least one touch-sensitive display device (114), and the operating unit can be operated in two operating modes, wherein a first operating mode is only executed if the operating unit (101) is connected to an operating station (102) of the container treatment machine, and wherein a second operating mode is only executed if the operating unit (101) is not physically connected to the operating station (102), wherein the first operating mode and the second operating mode differ at least with regard to one function that can be executed with the operating unit, **characterized in that** in the second operating mode, at least one of the following functions is available: diagnosis function, parameterization of the container treatment machine, monitoring of the operation of the container treatment machine.

2. Operating unit (101) according to claim 1, wherein in the first operating mode, all functions of the operating unit (101) can be executed, and wherein in the second operating mode, no function for which an emergency stop is required is accessible.

3. Operating unit (101) according to one of claims 1 to 2, wherein the operating unit (101) includes a detection means embodied to detect a connection of the operating unit (101) to the operating station (102), and to activate the first operating mode or the second operating mode depending on whether the operating unit (101) is connected to the operating station (102) or not.

4. Operating unit (101) according to claim 3, wherein the detection means is further embodied to detect the container treatment machine (130) to which the operating unit (101) is connected, and wherein optionally the detection means is embodied to adjust at least the functions available in the first operating mode depending on the detected container treatment machine (130).

5. Operating unit (101) according to one of claims 1 to 4, wherein the operating unit comprises an accumulator which can effect the power supply of the operating unit (101) during the second operating mode.

6. Operating unit (101) according to one of claims 1 to 5, wherein the operating unit (101) comprises an actuation element (113) by which the changeover from the first operating mode to the second operating mode can be indicated to the operating unit (101), wherein the operating unit (101) is embodied to terminate, upon actuation of the actuation element (113), at least all functions available only in the first operating mode, and then to enable the withdrawal of the operating unit from the operating station (102).

7. Method for operating a container treatment machine (130) by means of an operating unit (101) comprising a touch-sensitive display device (114), wherein the operating unit (101) is only operated in a first operating mode in a state where it is connected to an operating station (102) of the container treatment machine (130), and in a state where the operating unit (101) is not physically connected to the operating station (102), it is only operated in a second operating mode, wherein the first operating mode and the second operating mode differ at least with regard to one function that can be executed with the operating unit (101), **characterized in that** in the second operating mode, at least one of the following functions is available: diagnosis function, parameterization of the container treatment machine, monitoring of the operation of the container treatment machine.

8. Method according to claim 7, wherein in the first operating mode, all functions of the operating unit (101) can be executed, and wherein in the second operating mode, no function for which an emergency stop is required is accessible.

9. Method according to one of claims 7 to 8, wherein a detection means of the operating unit (101) detects whether the operating unit (101) is connected to the operating station (102), and activates the first operating mode or the second operating mode depending on whether the operating unit (101) is connected to the operating station or not.

10. Method according to claim 9, wherein the detection means detects the container treatment machine (130) to which the operating unit (101) is connected, and wherein optionally the detection means adjusts at least the functions available in the first operating mode depending on the detected container treatment machine.

11. Method according to one of claims 7 to 10, wherein by the actuation of an actuation element (113) of the operating unit (101), the changeover from the first operating mode to the second operating mode is displayed, and the operating unit (101) terminates all functions available only in the first operating mode upon actuation of the actuation element, and then enables the withdrawal of the operating unit (101) from the operating station (102).

12. Container treatment machine (130) for treating containers, for example in the beverage-processing industry or in packaging industry, wherein the container treatment machine comprises an operating station (102) to be connected to an operating unit (101) according to one of claims 1 to 7, and the container treatment machine is embodied to execute the method according to one of claims 7 to 11 with the operating unit (101).

13. Container treatment machine (130) according to claim 12, wherein the operating station (102) comprises a control switch box which optionally comprises an emergency stop switch, and/or wherein the operating station comprises a voltage supply for supplying the operating unit (101) in a state connected to the operating station.

## Revendications

1. Unité de commande (101) pour une machine de traitement de récipients (130), dans laquelle l'unité de commande comprend au moins un dispositif d'affichage tactile (114) et l'unité de commande peut fonctionner selon deux modes de fonctionnement, dans laquelle un premier mode de fonctionnement n'est mis en oeuvre que si l'unité de commande (101) est reliée à un poste de commande (102) de la machine de traitement de récipients et dans laquelle un second mode de fonctionnement n'est mis en oeuvre que si l'unité de commande (101) n'est pas physiquement reliée au poste de commande (102), dans laquelle le premier mode de fonctionnement et le second mode de fonctionnement diffèrent au moins en ce qui concerne une fonction pouvant être mis en oeuvre par l'unité de commande, **caractérisée en ce que**, dans le second mode de fonctionnement, au moins une des fonctions ci-dessous est disponible : fonction de diagnostic, paramétrage de la machine de traitement de récipients, surveillance du fonctionnement de la machine de traitement de récipients.

2. Unité de commande (101) selon la revendication 1, dans laquelle, dans le premier mode de fonctionnement, toutes les fonctions de l'unité de commande (101) peuvent être mises en oeuvre et dans laquelle, dans le second mode de fonctionnement, aucune fonction pour laquelle un arrêt d'urgence est nécessaire n'est accessible.

3. Unité de commande (101) selon l'une quelconque des revendications 1 à 2, dans laquelle l'unité de commande (101) dispose d'un dispositif de détection conçu pour détecter une liaison entre l'unité de commande (101) et le poste de commande (102) et, selon que l'unité de commande (101) est reliée ou non au poste de commande (102), pour activer le premier mode de fonctionnement ou le second mode de fonctionnement.

4. Unité de commande (101) selon la revendication 3, dans laquelle le dispositif de détection est en outre conçu pour détecter la machine de traitement de récipients (130) à laquelle l'unité de commande (101) est reliée et dans laquelle, de manière facultative, le dispositif de détection est conçu pour ajuster au moins les fonctions disponibles dans le premier mode de fonctionnement en fonction de la machine de traitement de récipients (130) détectée.

5. Unité de commande (101) selon l'une quelconque des revendications 1 à 4, dans laquelle l'unité de commande comprend un accumulateur qui peut assurer l'alimentation électrique de l'unité de commande (101) pendant le second mode de fonctionnement.

6. Unité de commande (101) selon l'une quelconque des revendications 1 à 5, dans laquelle l'unité de commande (101) comprend un élément d'actionnement (113) avec lequel le passage du premier mode de fonctionnement au second mode de fonctionnement peut être indiqué à l'unité de commande (101), dans laquelle l'unité de commande (101) est conçue pour, lors de l'actionnement de l'élément d'actionnement (113), mettre fin à au moins toutes les fonctions disponibles uniquement dans le premier mode de fonctionnement et autoriser ensuite le retrait de l'unité de commande du poste de commande (102).

7. Procédé de fonctionnement d'une machine de traitement de récipients (130) au moyen d'une unité de commande (101) comprenant un dispositif d'affichage tactile (114), dans lequel l'unité de commande (101) n'est exploitée dans un premier mode de fonctionnement que dans un état relié à un poste de commande (102) de la machine de traitement de récipients (130) et n'est exploitée dans un second mode de fonctionnement que dans un état dans lequel l'unité de commande (101) n'est pas physiquement reliée au poste de commande (102), dans lequel le premier mode de fonctionnement et le second mode de fonctionnement diffèrent au moins en ce qui concerne une fonction pouvant être mis en oeuvre par l'unité de commande (101), **caractérisé en ce que**, dans le second mode de fonctionnement, au moins une des fonctions ci-dessous est disponible : fonction de diagnostic, paramétrage de la machine de traitement de récipients, surveillance du fonctionnement de la machine de traitement de récipients.

8. Procédé selon la revendication 7, dans lequel, dans le premier mode de fonctionnement, toutes les fonctions de l'unité de commande (101) peuvent être mises en oeuvre et dans lequel, dans le second mode de fonctionnement, aucune fonction pour laquelle un arrêt d'urgence est nécessaire n'est accessible.

9. Procédé selon l'une quelconque des revendications 7 à 8, dans lequel un dispositif de détection de l'unité de commande (101) détecte si l'unité de commande (101) est reliée au poste de commande (102) et active le premier mode de fonctionnement ou le second mode de fonctionnement selon que l'unité de commande (101) est reliée ou non au poste de commande.

10. Procédé selon la revendication 9, dans lequel le dispositif de détection détecte la machine de traitement de récipients (130) à laquelle l'unité de commande (101) est reliée et dans lequel, de manière facultative, le dispositif de détection ajuste au moins les fonctions disponibles dans le premier mode de fonctionnement en fonction de la machine de traitement de récipients détectée.

11. Procédé selon l'une quelconque des revendications 7 à 10, dans lequel le passage du premier mode de fonctionnement au second mode de fonctionnement est indiqué grâce à l'actionnement d'un élément d'actionnement (113) de l'unité de commande (101), et l'unité de commande (101) met fin à toutes les fonctions disponibles uniquement dans le premier mode de fonctionnement lors de l'actionnement de l'élément d'actionnement et autorise ensuite le retrait de l'unité de commande (101) du poste de commande (102).

12. Machine de traitement de récipients (130) permettant de traiter des récipients, par exemple dans l'industrie du traitement des boissons ou dans l'industrie de l'emballage, dans laquelle la machine de traitement de récipients comprend une station de commande (102) à relier à une unité de commande (101) selon l'une quelconque des revendications 1 à 7 et la machine de traitement de récipients est conçue pour mettre en oeuvre le procédé selon l'une quelconque des revendications 7 à 11 avec l'unité de commande (101).

13. Machine de traitement de récipients (130) selon la revendication 12, dans laquelle le poste de commande (102) comprend une boîte à boutons-poussoirs comprenant éventuellement un commutateur d'arrêt d'urgence, et/ou dans laquelle le poste de commande comprend une alimentation en tension permettant d'alimenter l'unité de commande (101) dans l'état de liaison avec le poste de commande.
